# EUROPÄISCHE PATENTSCHRIFT

(11) **EP 4 183 670 B1**
(45) Veröffentlichungstag und Bekanntmachung des Hinweises auf die Patenterteilung: **27.08.2025**
(21) Anmeldenummer: 22200929.2
(22) Anmeldetag: 11.10.2022
(51) Int. Cl.: B62J 11/10, B62K 19/32, B62K 21/18, B62K 21/00

(54) **LENKANSCHLAG FÜR FAHRRADLENKER**
STEERING STOP FOR BICYCLE HANDLEBARS
BUTÉE DE DIRECTION POUR GUIDON DE BICYCLETTE

(30) Priorität: 17.11.2021 DE 202021106265 U
(43) Veröffentlichungstag der Anmeldung: 24.05.2023
(73) Patentinhaber: Canyon Bicycles GmbH, 56073 Koblenz (DE)
(72) Erfinder: THUMM, Johannes, 56076 Koblenz (DE)
(74) Vertreter: dompatent von Kreisler Selting Werner - Partnerschaft von Patent- und Rechtsanwälten mbB

(56) Entgegenhaltungen:
- EP-A1- 1 787 899
- DE-A1- 102018 006 153
- US-A1- 2020 361 559
- US-B1- 10 293 879

## Beschreibung

Die Erfindung betrifft einen Lenkanschlag für Fahrradlenker.

Beispielsweise bei einem Sturz oder wenn ein Fahrrad umfällt, besteht das Risiko einer Beschädigung des Oberrohrs, insbesondere durch am Lenker monierte Bauteile wie Brems- und/oder Schaltgriffe. Derartige Beschädigungen müssen insbesondere bei aus faserverstärkten Kunststoffen wie aus Karbon hergestellten Fahrradrahmen vermieden werden, da dies gegebenenfalls sogar zu einer Zerstörung des Fahrradrahmens führen kann.

Aus DE 20 2012 008 119.5 ist ein Lenkanschlag bekannt, der ein erstes am Gabelschaft einer Fahrradgabel klemmend fixierbares Anschlagelement aufweist. Ein zweites Anschlagelement, das zur Begrenzung eines Lenkeinschlags dient, wirkt mit dem ersten Anschlagelement zusammen. Das zweite Anschlagelement ist mit zwei Schrauben an einer Oberseite des Oberrohrs befestigt. Ein derartiger Lenkanschlag ist zwar für Mountainbikes und Trekkingräder gut geeignet, jedoch für integriert ausgestaltete Cockpits, wie sie insbesondere bei Rennrädern, Triathlonrädern und dergleichen vorgesehen werden, nicht gut geeignet.

Ein Lenkanschlag für Fahrräder mit den Merkmalen des Oberbegriffs des Anspruchs 1 ist in DE 10 2018 006 153 beschrieben.

Aufgabe der Erfindung ist es, einen Lenkanschlag zu schaffen, der insbesondere auch für integriert ausgestaltete Cockpits geeignet ist.

Die Lösung der Aufgabe erfolgt erfindungsgemäß durch einen Lenkanschlag mit den Merkmalen des Anspruchs 1.

Der erfindungsgemäße Lenkanschlag für Fahrradlenker weist ein erstes Anschlagelement auf, das am Gabelschaft einer Fahrradgabel fixierbar ist. Dieses erste Anschlagelement weist zwei Anschläge auf. Mit Hilfe dieser beiden Anschläge ist ein linker und rechter Lenkeinschlag begrenzt. Ferner ist ein zweites Anschlagelement vorgesehen, das am Fahrradrahmen fixierbar ist und mit dem ersten Anschlagelement zusammenwirkt. Erfindungsgemäß ist das erste Anschlagelement derart ausgebildet, dass mindestens eine Aussparung zum Hindurchführen von Leitungen vorgesehen ist. Bei Leitungen handelt es sich beispielsweise um Kabel, Bowdenzüge und dergleichen. Mit Hilfe des erfindungsgemäßen Lenkanschlags ist es somit möglich, Leitungen ins Innere des Gabelschaftes oder auch seitlich neben dem Gabelschaft in das Steuerrohr des Fahrradrahmens einzuführen und sodann durch den Fahrradrahmen beispielsweise zu einer elektrischen oder mechanischen Schaltung zu führen. Es ist somit möglich, einerseits einen Lenkanschlag vorzusehen, um ein Beschädigen des Fahrradrahmens, insbesondere des Oberrohrs bei einem Sturz oder dergleichen zu vermeiden und andererseits ein integriertes Cockpit auszugestalten.

Vorzugsweise ist das erste Anschlagelement ringförmig ausgebildet und umgibt den Gabelschaft vorzugsweise vollständig. Besonders bevorzugt ist es, dass das insbesondere ringförmig ausgebildete erste Anschlagelement durch ein Klemmelement am Gabelschaft fixierbar ist. Dies ist in besonders bevorzugter Ausführungsform dadurch realisiert, dass das erste Anschlagelement ringförmig ausgebildet ist und einen Schlitz aufweist. Mit Hilfe eines insbesondere als Schraube ausgebildeten Klemmelements kann ein klemmendes Fixieren des ersten Anschlagelements am Gabelschaft auf einfache Weise realisiert werden.

Besonders bevorzugt ist es, dass die beiden Anschläge des ersten Anschlagelements Anschlagflächen aufweisen. Diese Flächen berühren in den jeweiligen Grenzwinkeln, bei einem extremen rechten oder linken Einschlag des Lenkers, das zweite Anschlagelement. Die beiden Anschlagsflächen weisen zueinander vorzugsweise einen Winkel von weniger als 300° auf. Insbesondere ist der Winkel kleiner als 250° und besonders bevorzugt kleiner als 180°. Durch das Anschlagelement, das auch eine gewisse Breite aufweist, verringert sich der maximal mögliche Lenkwinkel um beispielsweise 10° bis 20°. Der Lenker kann somit, bezogen auf die Fahrtrichtung um 70° bis 100° eingeschlagen werden, bevor die linke oder rechte Anschlagfläche das zweite Anschlagelement berührt.

Des Weiteren ist es bevorzugt, dass das erste Anschlagelement als Abdeckelement, insbesondere Abdeckring, insbesondere für das obere Steuerlager dient. Das insbesondere ringförmig ausgebildete erste Anschlagelement weist somit eine zusätzliche Schutzfunktion, insbesondere vor Verschmutzung für das obere Steuerlager auf.

Besonders bevorzugt ist es, dass die mindestens eine Aussparung zum Durchführen von Leitungen auf eine der Anschlagfläche gegenüberliegenden bzw. abgewandten Seite der Anschlagfläche vorgesehen ist. Beim Vorsehen von zwei Anschlagflächen und mindestens zwei Aussparungen ist es bevorzugt, dass jeweils zumindest eine der Aussparungen je Anschlag jeweils auf der Anschlagfläche abgewandten oder gegenüberliegenden Seite angeordnet ist. Es handelt sich hierbei um diejenige Seite, die im montierten Zustand in Fahrtrichtung weist.

Die mindestens eine Aussparung ist derart ausgebildet, dass diese nach außen offen ist. Es handelt sich somit in bevorzugter Ausführungsform nicht um eine Durchgangsöffnung, sondern um eine Ausnehmung oder Einbuchtung. Relevant ist hierbei, dass die mindestens eine Aussparung in montiertem Zustand des ersten Anschlagelements derart ausgebildet ist, dass Leitungen durch die Aussparung in das Gabelrohr des Fahrradrahmens eingeführt werden können. Somit ist es auf einfache Weise möglich, beispielsweise Leitungen von einer Brems- und/oder Schalthebeleinheit seitlich an dem ersten Anschlagelement im Bereich der Aussparung in den Rahmen, insbesondere das Gabelrohr des Rahmens einzuführen. Die bevorzugte Ausführungsform der mindestens einen Aussparung als nach außen offene Aussparung bzw. Mulde oder dergleichen hat ferner den Vorteil, dass das entsprechende Element einfach ausgetauscht werden kann, ohne dass zuvor Leitungen geöffnet und durch die entsprechende Aussparung hindurchgezogen werden müssen. Ferner ist es möglich den Vorbau deutlich tiefer zu montieren, da die durch die mindestens eine offene Aussparung geführten Leitungen nach vorne und nicht nach oben geführt werden können. Dies hat den weiteren Vorteil, dass Leitungen nicht durch einen Spacer oder Abstandshalter geführt werden müssen. Insofern ist die Montage und Demontage von Spacern unabhängig möglich.

Das zweite Anschlagelement ist am Fahrradrahmen fixierbar. Vorzugsweise erfolgt eine Fixierung in Bereich des Oberrohrs des Fahrradrahmens. Hierbei ist es möglich, das zweite Anschlagelement auf einer Oberseite des Oberrohrs anzuordnen. Da dies jedoch Schmutzablagerungen in diesem Bereich hervorruft und gegebenenfalls auch verletzungsträchtig sein kann, ist das zweite Anschlagelement erfindungsgemäß im Fahrradrahmen, insbesondere im Oberrohr des Fahrradrahmens anzuordnen. Das zweite Anschlagelement ist somit von außen im Wesentlichen nicht sichtbar. Im montierten Zustand ist es insofern bevorzugt, dass das zweite Anschlagelement unterhalb einer Oberseite des Oberrohrs angeordnet ist. Entsprechend ist auch die Anordnung des ersten Anschlagelements vorzugsweise derart, dass dies unterhalb der Oberseite des Oberrohrs angeordnet ist. Das Vorsehen des zweiten Anschlagelements im, insbesondere innerhalb des Fahrradrahmens, insbesondere des Oberrohrs, stellt eine von dem Vorsehen mindestens einer Aussparung zum Durchführen von Leitungen unabhängige Erfindung dar, wobei jedoch die Kombination beider Erfindungen eine vorteilhafte Weiterbildung dargestellt.

Vorzugsweise weist das Oberrohr eine Ausnehmung auf, in der das zweite Anschlagelement angeordnet ist. Insbesondere kann das zweite Anschlagelement in diese Ausnehmung eingesteckt werden. Die Fixierung kann über entsprechende Fixierungsmittel, über Rastelemente oder auch klemmend, insbesondere auch allein aufgrund des Formschlusses, erfolgen. Die Ausnehmung in der das zweite Anschlagelement angeordnet ist, ist vorzugsweise in Richtung des Gabelschafts des Rahmens offen.

Besonders bevorzugt ist es, dass das zweite Anschlagelement ein Halteelement aufweist, das zum Verbinden mit dem Fahrradrahmen, insbesondere zum Einstecken in die Ausnehmung dient. Ferner weist das zweite Anschlagelement in bevorzugter Weiterbildung einen Anschlag auf. Der Anschlag ist vorzugsweise über einen Verbindungssteg mit dem Haltelement verbunden. Hierbei ist es besonders bevorzugt, dass dieser Verbindungssteg als Sollbruchstelle ausgebildet ist. Dies hat den Vorteil, dass beim Auftreten großer Kräfte eine Beschädigung des Fahrradrahmens im Bereich der Anordnung des Halteelements vermieden ist, da der Anschlag vom Halteelement abbricht. Hierbei wird ein großer Betrag an Energie absorbiert, so dass weiterhin das Risiko des Beschädigens des Oberrohrs durch am Lenker befestigte Bauteile verringert ist.

Ein besonderer Vorteil der erfindungsgemäßen Ausgestaltung des zweiten Anschlagelements besteht darin, dass dieses bei Bedarf auf einfache Weise ausgetauscht werden kann. Es ist möglich, dass zweite Anschlagelement als aufsteckbares oder aufschraubbares Anschlagelement auszubilden. Insbesondere ist eine Demontage weiterer Bauteile, wie beispielsweise einer Lagerschale oder dergleichen nicht erforderlich. Die Ausgestaltung des zweiten Anschlagelements, insbesondere unabhängig von einer Lagerschale hat ferner den Vorteil, dass auf die Lagerschale verzichtet werden kann und der Lagersitz unmittelbar im Rahmen integriert werden kann.

Bei einer weiteren bevorzugten Ausführungsform der Erfindung ist an einer Oberseite des ersten Anschlagelements ein, insbesondere ringförmig ausgebildetes Abdeckelement vorgesehen. Mit Hilfe dieses Abdeckelements ist es besonders bevorzugt, die Aussparungen abzudecken, um ein Eindringen von Wasser und Schmutz zu vermeiden. Bevorzugt ist es daher, dass das Abdeckelement eine Durchgangsöffnung aufweist, durch die die Leitungen in Richtung der mindestens einen Aussparung im ersten Anschlagelement hindurchgeführt werden können. Vorzugsweise ist die mindestens eine Durchgangsöffnung des Abdeckelements mit einem Verschlusselement verschlossen. Dies umschließt die hindurchgeführten Leitungen vorzugsweise im Wesentlichen dichtend. Besonders bevorzugt ist es, dass das Verschlusselement aus einem elastischen Kunststoffmaterial wie einem Gummi hergestellt ist und mindestens einen Schlitz aufweist, um Leitungen hindurchzuführen. Insbesondere ist ein kreuzförmiger Schlitz vorgesehen.

Wenn das erste Anschlagelement über ein Klemmelement, wie eine Schraube klemmend am Gabelschaft fixiert ist, ist es ferner bevorzugt, dass das Abdeckelement im Bereich des Klemmelements eine weitere Durchgangsöffnung aufweist, um das entsprechende Werkzeug wie einen Inbusschlüssel hindurchführen zu können. Vorzugsweise ist auch diese Durchgangsöffnung mit einem Verschlusselement verschlossen, das in bevorzugter Ausführungsform entsprechend dem Verschlusselement der anderen Durchgangsöffnungen ausgebildet ist.

Vorzugsweise ist das Abdeckelement formschlüssig mit dem ersten Anschlagelement verbunden. Hierdurch ist ein Verdrehen des Abdeckelements gegenüber dem ersten Anschlagelement vermieden. Eine im montierten Zustand weitere Fixierung erfolgt beispielsweise durch den Lenkervorbau, der oberhalb des Abdeckelements mit dem Gabelschaft verbunden ist.

Da es besonders bevorzugt ist, dass das erste Anschlagelement klemmend mit dem Gabelschaft verbunden ist, ist es möglich, eine auf die Steuerlager aufzubringende Vorspannung aufrecht zu erhalten. Zur Montage werden somit zunächst die beiden Steuerlager gegeneinander vorgespannt und sodann das erste Anschlagelement klemmend am Gabelschaft fixiert. Dies hat den Vorteil, dass beispielsweise zum Transport der Vorbau zusammen mit dem Lenker vom Gabelschaft gelöst werden kann, ohne dass bei der erneuten Montage ein Einstellen der Vorspannung der Steuerlager erforderlich ist.

Ferner betrifft die Erfindung einen Fahrradrahmen, der insbesondere ein Oberrohr und ein Gabelrohr aufweist, das mit dem Oberrohr verbunden ist. Ferner weißt der Fahrradrahmen eine Gabel auf, deren Gabelschaft im Gabelrohr angeordnet ist. Der Fahrradrahmen ist mit einem vorstehend beschriebenen Lenkeranschlag in bevorzugter Weiterbildung versehen. Insbesondere weist das Oberrohr eine Ausnehmung auf, in der ein Halteelement des zweiten Anschlagelements angeordnet, insbesondere einsteckbar ist.

Nachfolgend wird die Erfindung anhand einer bevorzugten Ausführungsform unter Bezugnahme auf die anliegenden Zeichnungen näher erläutert.

Es zeigen:
- Figur 1: eine schematische, perspektivische Ansicht der beiden Anschlagelemente,
- Figur 2: eine schematische perspektivische Draufsicht auf das Abdeckelement, und
- Figur 3: eine teilweise geschnittene Ansicht des gesamten Lenkanschlags im montierten Zustand.

Der Lenkanschlag weist ein erstes Anschlagelement 10 sowie ein zweites mit diesem zusammenwirkendes Anschlagelement 12 auf. Das erste Anschlagelement 10, das insbesondere ringförmig ausgebildet ist, weist zwei einander gegenüberliegende Anschläge 14, 16 auf. Jedes Anschlagelement 14, 16 weist auf seiner entgegen der Fahrtrichtung 18 weisenden Rückseite eine Anschlagfläche 20, 22 auf. Bei einem Verdrehen des Lenkers in Fahrtrichtung nach links ist der Einlenkwinkel dadurch begrenzt, dass die Anschlagfläche 20 gegen eine in Fahrtrichtung linke Anschlagfläche 24 des zweiten Anschlagelements 12 anschlägt. Entsprechend schlägt die Anschlagfläche 22 des Anschlages 16 bei einem extremen Lenkeinschlag nach rechts an die rechte Anschlagfläche 26 an.

Das erste Anschlagelement 10 wird in der dargestellten bevorzugten Ausführungsform klemmend an einem nicht dargestellten Gabelschaft fixiert. Hierzu weist das erste Anschlagelement einen Schlitz 28 auf, wobei die Schlitzbreite und somit der Innendurchmesser des ersten Anschlagelements durch ein Klemmelement wie eine Klemmschraube 30 verringert werden kann.

Erfindungsgemäß weist das erste Anschlagelement im dargestellten Ausführungsbeispiel zwei Aussparungen 32, 34 auf. Diese Aussparungen sind jeweils auf der gegenüberliegenden Seite der Anschlagflächen 20, 22 der Anschläge 14, 16 angeordnet. Anders ausgedrückt, die beiden Aussparungen 32, 34 sind in Fahrtrichtung 18 vor den beiden Anschlägen 14, 16 angeordnet. Insofern ist es möglich, in diesem Bereich Leitungen in den Rahmen, insbesondere in das Gabelrohr des Rahmens einzuführen.

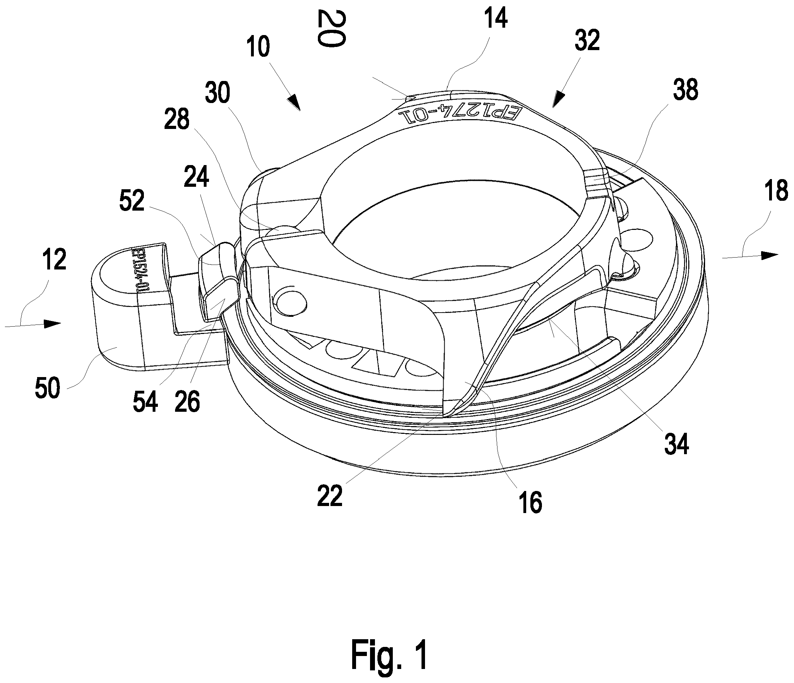

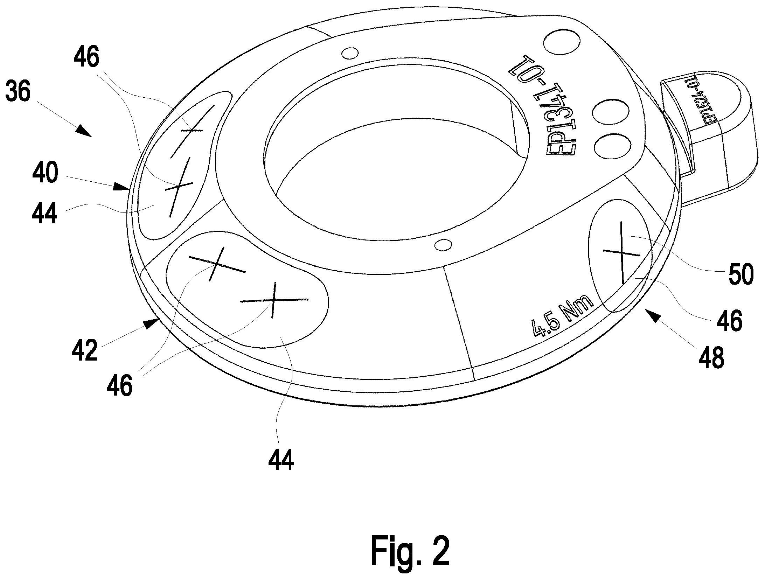

Zur Abdeckung des ersten Anschlagelements 10 ist ein vorzugsweise ebenfalls ringförmig ausgebildetes Abdeckelement 36 (Figur 2) vorgesehen. Das Abdeckelement 36 weist eine in der Figur nicht sichtbare nach unten weisende Nase auf, die in eine Ausnehmung 38 (Figur 1) des ersten Anschlagelements eingreift, so dass ein Verdrehen des Abdeckelements 16 vermieden ist.

Im Bereich der Aussparungen 32, 34 weist das Abdeckelement Durchgangsöffnungen 40, 42 auf. Beide Durchgangsöffnungen sind jeweils durch ein Verschlusselement 44 verschlossen, wobei jedes Verschlusselement 44 zwei kreuzförmige Schlitze zum Hindurchführen von Leitungen, Kabeln und dgl. aufweist, so dass diese dichtend hindurchgeführt werden können.

Im monierten Zustand ist die Durchgangsöffnung 42 oberhalb der Aussparung 32 und die Durchgangsöffnung 44 oberhalb der Aussparung 34 angeordnet.

Des Weiteren weist das Abdeckelement 36 eine Durchgangsöffnung 48 auf, die ebenfalls von einem Verschlusselement 50 mit Schlitzen 46 verschlossen ist. Die Durchgangsöffnung 46 dient zum Hindurchführen eines Werkzeuges und ist im montierten Zustand auf Höhe der Schraube 30 angeordnet.

Im Betrieb ist die Lenkkraft des ersten Anschlagelements 10 am Gabelschaft derart eingestellt, dass beim Anschlagen eines der beiden Anschläge 14, 16 sich zunächst das erste Anschlagelement auf dem Gabelschaft verdreht. Durch Lösen der Schraube 30 kann ein Zurückdrehen und erneutes Klemmen des ersten Anschlagelements auf einfache Weise erfolgen.

Das zweite Anschlagelement weist ein Halteelement 50 sowie einen Anschlag 52 auf. Der Anschlag 52 bildet die einander gegenüberliegenden Anschlagflächen 24, 26 aus. Der Anschlag 52 ist über einen Verbindungssteg 54 mit dem Halteelement 50 verbunden. Der Verbindungssteg 54 dient hierbei als Sollbruchstelle. Wenn beispielsweise ein Verdrehen des ersten Anschlagelements auf dem Gabelschaft aufgrund zu hoher Klemmkräfte oder beispielsweise aufgrund von Verschmutzungen nicht erfolgt, bricht der Verbindungssteg, um eine zu hohe Krafteinleitung über das Halteelement 50 in den Fahrradrahmen zu vermeiden.

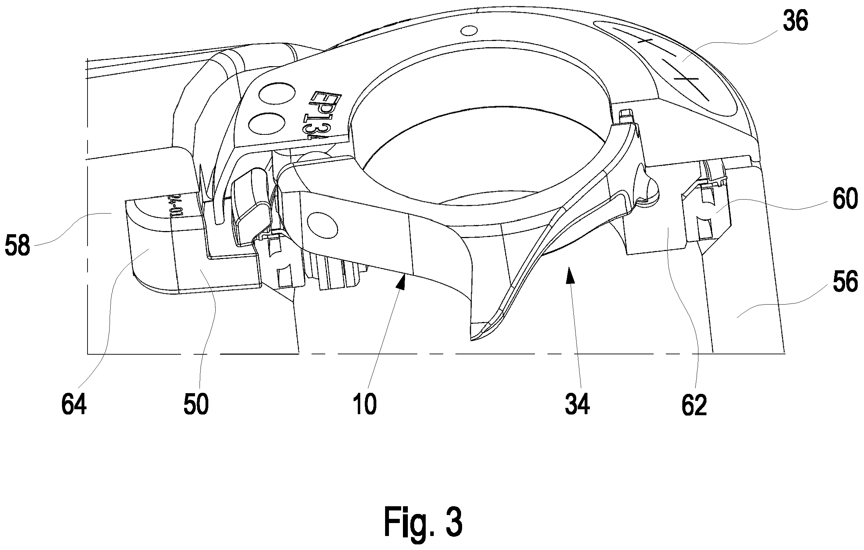

Im montierten Zustand (Figur 3) ist ein Gabelrohr 56 des Fahrradrahmens mit einem Oberrohr 58 verbunden bzw. einstückig ausgebildet. Innerhalb des Gabelrohrs 56 ist der Gabelschaft der Fahrradgabel angeordnet und über ein oberes Steuerlager 60 sowie ein nicht dargestelltes unteres Steuerlager drehbar gelagert. Im dargestellten Ausführungsbeispiel ist zur Fixierung der Steuerlager 60, jeweils ein Kompressionsring 62 vorgesehen. Dieser weist vorzugsweise ebenfalls Leistungsdurchführungen auf, sofern der Kompressionsring 62 auch im Bereich der Aussparungen 32, 34 angeordnet ist. Nach dem Vorspannen der beiden Steuerlager 60 erfolgt ein klemmendes Fixieren des ersten Anschlagelements 10, so dass unabhängig davon, ob der Vorbau montiert oder demontiert ist, die Vorspannung der Steuerlager beigehalten bleibt.

In einer Ausnehmung 64, die auf einer in Richtung des Gabelrohrs 56 weisenden Seite des Oberrohrs 58 vorgesehen ist, wird das Halteelement 50 des zweiten Anschlagelements 12 eingesteckt. Eine Fixierung erfolgt im dargestellten Ausführungsbeispiel durch das obere Steuerlager 60. Da das Halteelement 50 in der innerhalb des Oberrohrs 58 angeordneten Ausnehmung 54 angeordnet ist, ist dieses nicht sichtbar.

Oberhalb des ersten Anschlagelements 10 wird sodann das in Figur 3 nur schematisch dargestellte Abdeckelement 36 (Figur 2) angeordnet.

## Patentansprüche

1. Lenkanschlag für Fahrradlenker, mit
einem am Gabelschaft einer Fahrradgabel fixierbaren ersten Anschlagelement (10) mit zwei Anschlägen (14, 16), und
einem am Fahrradrahmen (58) fixierbaren, mit dem ersten Anschlagelementen (10) zusammenwirkenden zweiten Anschlagelement (12),
wobei das erste Anschlagelement mindestens eine nach außen offene Aussparung zum Durchführen von Leitungen aufweist,
**dadurch gekennzeichnet, dass**
das zweite Anschlagelement (12) in einer Ausnehmung (64) im Fahrradrahmen angeordnet ist.

2. Lenkanschlag für Fahrradlenker nach Anspruch 1, **dadurch gekennzeichnet, dass** erste Anschlagelement (10) ringförmig ausgebildet ist und vorzugsweise zum klemmenden Fixieren am Gabelschaft ein Klemmelement (30) aufweist.

3. Lenkanschlag für Fahrradlenker nach Anspruch 1 oder 2, **dadurch gekennzeichnet, dass** Anschlagflächen (20, 22) des ersten Anschlagelements (10) einen Winkel von weniger als 300°, vorzugsweise weniger als 250° und besonders bevorzugt weniger als 180° zueinander aufweisen.

4. Lenkanschlag für Fahrradlenker nach einem der Ansprüche 1 bis 3, **dadurch gekennzeichnet, dass** das erste Anschlagelement (10) als Abdeckring und/oder Fixierelement eines insbesondere oberen Steuerlagers (60) dient.

5. Lenkanschlag für Fahrradlenker nach einem der Ansprüche 1 bis 4, **dadurch gekennzeichnet, dass** die Anschläge (14, 16) Anschlagflächen (20, 22) zur Begrenzung eines linken oder rechten Lenkeinschlags aufweisen.

6. Lenkanschlag für Fahrradlenker nach Anspruch 5, **dadurch gekennzeichnet, dass** eine der mindestens einen Aussparung (32, 34) auf einer der jeweiligen Anschlagfläche (20, 22) gegenüberliegenden Seite des Anschlags (14, 16) vorgesehen ist.

7. Lenkanschlag für Fahrradlenker nach einem der Ansprüche 1 bis 6, **dadurch gekennzeichnet, dass** die das zweite Anschlagelement (12) aufnehmende Ausnehmung (64) im Oberrohr (34) des Fahrradrahmens anordenbar ist, wobei vorzugsweise die Ausnehmung (64) an einer in Richtung des Gabelrohrs (56) weisenden Vorderseite des Oberrohrs (58) angeordnet ist und vorzugsweise ausschließlich in Richtung des Gabelrohrs (56) offen ist.

8. Lenkanschlag für Fahrradlenker nach einem der Ansprüche 1 bis 7, **dadurch gekennzeichnet, dass** das zweite Anschlagelement (12) ein, insbesondere in die Ausnehmung (64) einsteckbares Halteelement und einen mit dem Halteelement (50) verbundenen Anschlag (52) aufweist.

9. Lenkanschlag für Fahrradlenker nach Anspruch 8, **dadurch gekennzeichnet, dass** ein Verbindungssteg (54) zwischen dem Halteelement (50) und dem Anschlagelement (52) als Sollbruchstelle ausgebildet ist.

10. Lenkanschlag für Fahrradlenker nach einem der Ansprüche 1 bis 9, **dadurch gekennzeichnet, dass** an einer Oberseite des ersten Anschlagelements (10) ein, insbesondere ringförmig ausgebildetes Abdeckelement (36) vorgesehen ist, wobei das Abdeckelement die mindestens eine Aussparung (32, 34) vorzugsweise abdeckt.

11. Lenkanschlag für Fahrradlenker nach Anspruch 10, **dadurch gekennzeichnet, dass** das Abdeckelement (36) im Bereich der mindestens einen Aussparung (32, 34) eine mit einem Verschlusselement (44) verschließbare Durchgangsöffnung (40,42) aufweist.

12. Lenkanschlag für Fahrradlenker nach Anspruch 11, **dadurch gekennzeichnet, dass** das Verschlusselement (44) aus elastischem Kunststoff mit Schlitz (46) zum Hindurchführen von Leitungen ausgebildet ist.

13. Lenkanschlag für Fahrradlenker nach einem der Ansprüche 10 bis 12, **dadurch gekennzeichnet, dass** das Abdeckelement (36) im Bereich eines Klemmelements (30) des ersten Anschlagelements (10) eine insbesondere mit einem Verschlusselement (50) verschlossene Durchgangsöffnung (48) aufweist.

14. Lenkanschlag für Fahrradlenker nach einem der Ansprüche 10 bis 13, **dadurch gekennzeichnet, dass** das Abdeckelement (36) formschlüssig mit dem ersten Anschlagelement (10) verbunden ist.

15. Fahrradrahmen mit einem Oberrohr (58) und einem mit dem Oberrohr verbundenen Gabelrohr (56), **gekennzeichnet durch** einen Lenkanschlag nach einem der Ansprüche 1 bis 14.

## Claims

1. Steering stop for bicycle handlebars, comprising
a first stop element (10) with two stops (14, 16), said element being adapted to be fixed on the steer tube of a bicycle fork, and
a second stop element (12) adapted to be fixed on the bicycle frame (58) and cooperating with the first stop element (10),
wherein the first stop element has at least one recess, preferably open to the outside, for passing lines therethrough
**characterized in that**
the second stop element (12) is arranged in a recess (64) in the bicycle frame.

2. Steering stop for bicycle handlebars according to claim 1, **characterized in that** the first stop element (10) is annular in shape and preferably comprises a clamping element (30) for a clamping fixation on the steer tube.

3. Steering stop for bicycle handlebars according to claim 1 or 2, **characterized in that** stop surfaces (20, 22) of the first stop element (10) have an angle of less than 300°, preferably less than 250°, and, as is particularly preferred, less than 180° with respect to each other.

4. Steering stop for bicycle handlebars according to any one of claims 1 to 3, **characterized in that** the first stop element (10) serves as a cover and/or a fixing element of in particular an upper headset bearing (60).

5. Steering stop for bicycle handlebars according to any one of claims 1 to 4, **characterized in that** the stops (14, 16) have stop surfaces (20, 22) for limiting a left or right steering lock.

6. Steering stop for bicycle handlebars according to claim 5, **characterized in that** one of the at least one recesses (32, 34) is provided on a side of the stop (14, 16) opposite the respective stop surface (20, 22).

7. Steering stop for bicycle handlebars according to any one of claims 1 to 6, **characterized in that** the recess (64) receiving the second stop element (12) is adapted to be arranged in the top tube (34) of the bicycle frame, wherein the recess (64) is preferably arranged on a front side of the top tube (58) facing in the direction of the head tube (56) and is open preferably only towards the head tube (56).

8. Steering stop for bicycle handlebars according to any one of claims 1 to 7, **characterized in that** the second stop element (12) comprises a retaining element adapted, in particular, for insertion into the recess (64), and a stop (52) connected to the retaining element (50).

9. Steering stop for bicycle handlebars according to claim 8, **characterized in that** a connecting web (54) is formed between the retaining element (50) and the stop element (52) as a rated breaking point.

10. Steering stop for bicycle handlebars according to any one of claims 1 to 9, **characterized in that** an in particular annularly shaped cover element (36) is provided at an upper side of the first stop element (10), wherein the cover element preferably covers the at least one recess (32, 34).

11. Steering stop for bicycle handlebars according to claim 10, **characterized in that** in the area of the at least one recess (32, 34), the cover element (36) has a passage opening (40, 42) adapted to be closed by a closure element (44).

12. Steering stop for bicycle handlebars according to claim 11, **characterized in that** the closure element (44) is made of an elastic plastic material with a slot (46) for passing lines therethrough.

13. Steering stop for bicycle handlebars according to any one of claims 10 to 12, **characterized in that** in the area of a clamping element (30) of the first stop element (10), the cover element (36) has a passage opening (48) closed in particular by a closure element (50).

14. Steering stop for bicycle handlebars according to any one of claims 10 to 13, **characterized in that** the cover element (36) is positively connected to the first stop element (10).

15. A bicycle frame with a top tube (58) and a head tube (56) connected to the top tube, **characterized by** a steering stop according to any one of claims 1 to 14.

## Revendications

1. Butée de direction pour guidon de bicyclette, comportant un premier élément de butée (10) pouvant être fixé sur le pivot de fourche d'une fourche de bicyclette et comportant deux butées (14, 16), et
un second élément de butée (12) pouvant être fixé sur le cadre de bicyclette (58) et coopérant avec le premier élément de butée (10),
dans laquelle le premier élément de butée présente au moins un évidement ouvert vers l'extérieur pour le passage de conduites,
**caractérisée en ce que**
le second élément de butée (12) est disposé dans une cavité (64) dans le cadre de bicyclette.

2. Butée de direction pour guidon de bicyclette selon la revendication 1, **caractérisée en ce que** le premier élément de butée (10) est réalisé sous forme annulaire et présente de préférence un élément de serrage (30) pour la fixation par serrage sur le pivot de fourche.

3. Butée de direction pour guidon de bicyclette selon la revendication 1 ou 2, **caractérisée en ce que** des surfaces de butée (20, 22) du premier élément de butée (10) présentent entre elles un angle inférieur à 300°, de préférence inférieur à 250° et de manière particulièrement préférée inférieur à 180°.

4. Butée de direction pour guidon de bicyclette selon l'une des revendications 1 à 3, **caractérisée en ce que** le premier élément de butée (10) sert de bague de recouvrement et/ou d'élément de fixation d'un palier de commande (60), en particulier supérieur.

5. Butée de direction pour guidon de bicyclette selon l'une des revendications 1 à 4, **caractérisée en ce que** les butées (14, 16) présentent des surfaces de butées (20, 22) permettant de limiter un braquage gauche ou droit.

6. Butée de direction pour guidon de bicyclette selon la revendication 5, **caractérisée en ce que** l'un de l'au moins un évidement (32, 34) est prévu sur un côté de la butée (14, 16) opposé à la surface de butée (20, 22) respective.

7. Butée de direction pour guidon de bicyclette selon l'une des revendications 1 à 6, **caractérisée en ce que** la cavité (64) recevant le second élément de butée (12) peut être disposée dans le tube supérieur (34) du cadre de bicyclette, dans laquelle, de préférence, la cavité (64) est disposée sur un côté avant du tube supérieur (58) orienté en direction du tube de fourche (56) et est de préférence ouverte exclusivement en direction du tube de fourche (56).

8. Butée de direction pour guidon de bicyclette selon l'une des revendications 1 à 7, **caractérisée en ce que** le second élément de butée (12) présente un élément de retenue pouvant en particulier être inséré dans la cavité (64) et une butée (52) reliée à l'élément de retenue (50).

9. Butée de direction pour guidon de bicyclette selon la revendication 8, **caractérisée en ce qu'**une nervure de liaison (54) entre l'élément de retenue (50) et l'élément formant butée (52) est conçue comme point destiné à la rupture.

10. Butée de direction pour guidon de bicyclette selon l'une des revendications 1 à 9, **caractérisée en ce qu'**un élément de recouvrement (36), en particulier réalisé sous forme annulaire, est prévu sur un côté supérieur du premier élément de butée (10), dans laquelle l'élément de recouvrement recouvre de préférence l'au moins un évidement (32, 34).

11. Butée de direction pour guidon de bicyclette selon la revendication 10, **caractérisée en ce que** l'élément de recouvrement (36) présente, dans la zone de l'au moins un évidement (32, 34), une ouverture de passage (40, 42) pouvant être fermée par un élément de fermeture (44).

12. Butée de direction pour guidon de bicyclette selon la revendication 11, **caractérisée en ce que** l'élément de fermeture (44) est réalisé en matière plastique élastique avec une fente (46) pour le passage de conduites.

13. Butée de direction pour guidon de bicyclette selon l'une des revendications 10 à 12, **caractérisée en ce que** l'élément de recouvrement (36) présente, dans la zone d'un élément de serrage (30) du premier élément de butée (10), une ouverture de passage (48) fermée en particulier par un élément de fermeture (50).

14. Butée de direction pour guidon de bicyclette selon l'une des revendications 10 à 13, **caractérisée en ce que** l'élément de recouvrement (36) est relié par complémentarité de forme au premier élément de butée (10).

15. Cadre de bicyclette comportant un tube supérieur (58) et un tube de fourche (56) relié au tube supérieur, **caractérisé par** une butée de direction selon l'une des revendications 1 à 14.
